# EUROPEAN PATENT APPLICATION

(11) **EP 4 549 400 A1**
(43) Date of publication of application: **07.05.2025**
(21) Application number: 24209655.0
(22) Date of filing: 29.10.2024
(51) Int. Cl.: C01G 53/50, H01M 4/36, H01M 4/525

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 31.10.2023 KR 20230148296
(71) Applicant: SAMSUNG SDI CO., LTD., Yongin-si, Gyeonggi-do 17084 (KR)
(72) Inventor: CHOO, Sung Ho, 17084 Yongin-si (KR); KIM, Young-Ki, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); JUN, Dowook, 17084 Yongin-si (KR); KANG, Gwiwoon, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A positive electrode active material, a method of preparing the same, a positive electrode, and a rechargeable lithium battery including the same are disclosed. The positive electrode active material includes core particles including a layered lithium nickel-manganese-based composite oxide having a nickel content (e.g., amount) of greater than or equal to about 60 mol% based on 100 mol% of a total metal in the layered lithium nickel-manganese-based composite oxide excluding lithium, and a coating layer located on the surface of the core particles and containing Al, wherein an Al content (e.g., amount) of the coating layer is about 0.5 mol% to about 1.5 mol% based on 100 mol% of a total metal in the positive electrode active material excluding lithium, and the coating layer has a fiber shape (e.g., in a form of fibers, having a fibrous structure, etc.).

## Description

### BACKGROUND

### 1. Field

This disclosure relates to positive electrode active materials, preparation methods thereof, positive electrodes including the positive electrode active materials, and rechargeable lithium batteries.

### 2. Description of the Related Art

A portable information device (such as a cell phone, a laptop, smart phone, and/or the like) and/or an electric vehicle has utilized a rechargeable lithium battery having relatively high energy density and easy portability as a driving power source. Recently, research has been actively conducted to utilize such a rechargeable lithium battery with relatively high energy density as a driving power source for hybrid and/or electric vehicles or as a power storage power source for power storage stations and/or power walls.

Various positive electrode active materials have been investigated to realize rechargeable lithium batteries suitable for these applications. Among them, lithium nickel-based oxide, lithium nickel manganese cobalt composite oxide, lithium nickel cobalt aluminium composite oxide, and lithium cobalt-based oxide are mainly utilized as positive electrode active materials. However, while the demand or desire for relatively large-sized, high-capacity, and/or high-energy-density rechargeable lithium batteries has recently increased, a shortage (severe shortage) in the supply of a positive electrode active material containing cobalt, a rare metal, is expected. For example, because cobalt is expensive and there are not many remaining reserves, there are needs or desires for developing positive electrode active materials that exclude (e.g., not include or not substantially include) cobalt or utilize cobalt in a reduced amount.

### SUMMARY

Aspects according to some embodiments are directed toward a positive electrode active material that includes a lithium nickel-manganese-based composite oxide, and implements (e.g., includes) a substantially uniform aluminium coating to improve the performance of rechargeable lithium batteries at high temperature and high voltage and ensure high capacity and long cycle-life characteristics.

Additional aspects will be set forth in part in the description which follows and, in part, will be apparent from the description, or may be learned by practice of the presented embodiments of the disclosure.

In one or more embodiments, a positive electrode active material includes core particles (e.g., each) including a layered lithium nickel-manganese-based composite oxide having a nickel content (e.g., amount) of greater than or equal to about 60 mol% based on 100 mol% of a total metal in the positive electrode active material excluding lithium, and a coating layer on a surface of (each of) the core particles and containing Al, wherein Al in the coating layer is about 0.5 mol% to about 1.5 mol% in amount based on 100 mol% of the total metal in the positive electrode active material excluding lithium, and the coating layer has a fiber shape (e.g., in a form of fibers, having a fibrous structure, etc.).

In one or more embodiments, a method of preparing a positive electrode active material includes (i) preparing core particles (e.g., each) including layered lithium nickel-manganese-based composite oxide having a nickel content (e.g., amount) of greater than or equal to about 60 mol% based on 100 mol% of a total metal in the layered lithium nickel-manganese-based composite oxide excluding lithium, and having a residual lithium content (e.g., amount) on a surface of (each of) the core particles of about 0.15 wt% to about 0.25 wt%, (ii) adding and mixing aluminium sulfate in an aqueous solvent to prepare a coating solution, (iii) adding and mixing the core particles in the coating solution to prepare a mixed solution with a pH of about 5.5 to about 7.5, and (iv) removing the aqueous solvent from the mixed solution, drying and performing heat treatment on a resulting product to obtain the positive electrode active material.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the positive electrode, a negative electrode, and an electrolyte.

At least some of the above and other features of the invention are set out in the claims.

The positive electrode active material according to one or more embodiments may maximize or increase capacity, while minimizing or reducing a production cost, to ensure long cycle-life characteristics and improve high-voltage characteristics and high-temperature characteristics. If (e.g., when) the positive electrode active material is applied to a rechargeable lithium battery, high initial charge/discharge capacity and efficiency may be achieved under high-voltage operating conditions, long cycle-life characteristics may be realized, and an amount of gas generated due to the high-voltage and high-temperature operation may be effectively suppressed or reduced.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure.
FIG. 1 is a schematic illustration of a cylindrical battery according to some embodiments.
FIG. 2 is a schematic illustration of a prismatic battery according to some embodiments.
FIG. 3 is a schematic illustration of a pouch-type or kind battery according to some embodiments.
FIG. 4 is a schematic illustration of a pouch-type or kind battery according to some embodiments.
FIG. 5 is a scanning electron microscope (SEM) image showing the surface of a coated product according to Example 1.
FIG. 6 is an enlarged image showing a portion of FIG. 5.
FIG. 7 is an energy dispersive X-ray spectroscopy (EDS) analysis image showing a cross-section of a positive electrode active material according to Example 1, in which the Al element is highlighted.
FIG. 8 is an SEM image showing the surface of a coated product according to Example 2.
FIG. 9 is an SEM image showing the surface of a coated product according to Example 3.
FIG. 10 is an SEM image showing the surface of a coated product according to Example 4.
FIG. 11 is an EDS analysis image showing a cross-section of a positive electrode active material according to Comparative Example 1, in which Al is highlighted.
FIG. 12 is an SEM image showing the surface of a coated product according to Comparative Example 2.
FIG. 13 is an SEM image showing the surface of a coated product according to Comparative Example 3-1.
FIG. 14 is an SEM image showing the surface of a coated product according to Comparative Example 3-2.
FIG. 15 is an SEM image showing the surface of a coated product according to Comparative Example 3-3.
FIG. 16 is an SEM image showing the surface of a coated product according to Comparative Example 4.
FIG. 17 is an SEM image showing the surface of the surface of a coated product according to Comparative Example 5.
FIG. 18 is a graph showing the ratio of Al content (e.g., amount) to a total content (e.g., amount) of Ni, Mn, and Al (Al/(Ni+Mn+Al)) on the particle surface as a result of the Energy Profiling Energy Dispersive X-ray Spectroscopy (EP-EDS) analysis of the coated products according to each of Examples 1 to 3 and Comparative Examples 1, 2, and 3-3.

### DETAILED DESCRIPTION

Hereinafter, specific embodiments will be described in more detail so that those of ordinary skill in the art can easily implement them. However, this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, the term "combination thereof' refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, (e.g., act or task) step, element, and/or a (e.g., any suitable) combination thereof, but it does not preclude the possibility of the presence or addition of one or more other features, numbers, (e.g., act or task) steps, elements, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In addition, the term "layer" as used herein includes not only a shape formed on the whole surface if (e.g., when) viewed from a plan view, but also a shape formed on a partial surface.

The average particle diameter may be measured by a suitable method (e.g., known to those skilled in the art), for example, by a particle size analyzer, or by a transmission electron microscopic image or a scanning electron microscopic image. In one or more embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to the diameter (D₅₀) of particles having a cumulative volume of 50 volume% in the particle size distribution that is obtained by measuring the size (diameter or length of the major axis) of about 20 particles at random in a scanning electron microscope image. Also, unless otherwise defined, in the present disclosure, the term "particle diameter" refers to an average diameter if (e.g., when) particles are spherical and refers to an average major axis length if (e.g., when) particles are non-spherical.

Herein, the term "or" is not to be construed as an exclusive meaning, for example, "A or B" refers to A, B, A+B, and/or the like.

The term "metal" as used herein refers to ordinary metals, transition metals and metalloids (semi-metals).

### Positive Electrode Active Material

In one or more embodiments, a positive electrode active material includes (e.g., is in the form of) core particles (e.g., each) including a layered lithium nickel-manganese-based composite oxide having a nickel content (e.g., amount) of greater than or equal to about 60 mol% based on 100 mol% of a total metal in the layered lithium nickel-manganese-based composite oxide excluding lithium, and a coating layer located on the surface of (each of) the core particles and containing Al. An Al content (e.g., amount) of the coating layer is about 0.5 mol% to about 1.5 mol% based on 100 mol% of a total metal in the positive electrode active material excluding lithium, and the coating layer has a fiber shape (e.g., in a form of fibers, having a fibrous structure, etc.).

As the price of cobalt, a rare metal, has recently risen sharply, there is a demand for the development of positive electrode active materials that exclude (do not include) cobalt or with a reduced cobalt content (e.g., amount). Among them, a positive electrode active material having an olivine crystal structure (such as lithium iron phosphate (LFP), lithium manganese phosphate (LMP), lithium manganese iron phosphate (LMFP), and/or the like) or a spinel crystal structure (such as lithium manganese oxide (LMO) and/or the like) has a limitation in realizing high capacity due to a small available lithium amount within their structures. The layered nickel-manganese-based positive electrode active material has excellent or suitable capacity and efficiency characteristics due to the high available lithium amount in the structure, making it suitable as a material for high-capacity batteries. However, as cobalt, which plays a key role in the layered structure, is removed, structural stability decreases, resistance increases, and it becomes difficult to secure long cycle-life characteristics. In addition, removing cobalt from the layered nickel-manganese positive electrode active material, may lead to a problem of accelerated side reaction with an electrolyte under high-voltage and high-temperature conditions, resultantly increasing gas generation and deteriorating cycle-life characteristics.

A method according to one or more embodiments may strengthen the surface of the lithium nickel-manganese-based positive electrode active material by uniformly (e.g., substantially uniformly) coating it with aluminium, thereby maintaining a stable structure even at high voltage and realizing long cycle-life characteristics.

### Core Particles

The core particles include lithium nickel-manganese-based composite oxide. A nickel content (e.g., amount) is greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the lithium nickel-manganese-based composite oxide. If the nickel content (e.g., amount) satisfies the above ranges, high capacity can be achieved and structural stability can be increased even if the cobalt content (e.g., amount) is reduced.

A manganese content (e.g., amount) may be greater than or equal to about 10 mol%, for example, greater than or equal to about 15 mol%, for example, about 15 mol% to about 40 mol%, about 15 mol% to about 35 mol%, about 15 mol% to about 30 mol%, or about 20 mol% to about 30 mol% based on 100 mol% of a total metal excluding lithium in the lithium nickel-manganese-based composite oxide. If the manganese content (e.g., amount) satisfies the above ranges, the positive electrode active material may improve structural stability while realizing high capacity.

The lithium nickel-manganese-based composite oxide may be, for example, a lithium nickel-manganese-aluminium-based composite oxide that further includes aluminium in addition to nickel and manganese. If the composite oxide includes aluminium, it is suitable or advantageous to maintain a stable layered structure even if the cobalt element is excluded from the structure. An aluminium content (e.g., amount) based on 100 mol% of the total metal in the lithium nickel-manganese-aluminium-based composite oxide excluding lithium may be greater than or equal to about 0.1 mol%, greater than or equal to about 0.5 mol%, or greater than or equal to about 1 mol%, for example, greater than 0 mol% and less than or equal to 3 mol%, about 1 mol% to about 3 mol%, about 1 mol% to about 2.5 mol%, about 1 mol% to about 2 mol%, or about 1 mol% to about 2.5 mol%. If the aluminium content (e.g., amount) satisfies the above ranges, a stable layered structure may be maintained even if cobalt is excluded, the problem of structure collapse due to charging and discharging may be suppressed or reduced, and long cycle-life characteristics of the positive electrode active material may be realized.

According to one or more embodiments, a concentration of aluminium within the core particle may be substantially uniform. In some embodiments, there may not be a concentration gradient of aluminium from the center to the surface within the core particle, or the aluminium concentration in the external portion of the core particle may be neither higher nor lower than in the internal portion, and the aluminium within the core particle may be evenly distributed. This may be a structure obtained by utilizing aluminium raw materials during precursor production without additional doping of aluminium during the synthesis of the core particles and thereby synthesizing a composite oxide utilizing a nickel-manganese-aluminium-based hydroxide as a precursor. The core particles may (e.g., each) be in a form of a secondary particle in which a plurality of primary particles are agglomerated, and the aluminium content (e.g., amount) inside the primary particle may be the same (or substantially the same) or similar regardless of the location of the primary particle. For example, if a primary particle is selected at a random position in the cross-section of a secondary particle and the aluminium content (e.g., amount) is measured inside the primary particle rather than at its interface (e.g., with another particle), regardless of the location of the primary particle, that is, whether the primary particle is close to the center of the secondary particle or close to the surface, the aluminium content (e.g., amount) may be substantially the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can all be improved at the same time.

In some embodiments, the lithium nickel-manganese-based composite oxide may be represented by Chemical Formula 1.

Chemical Formula 1 Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0 ≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

In some embodiments, in Chemical Formula 1, 0.9≤a1≤1.5, or 0.9≤a1≤1.2. Additionally, Chemical Formula 1 may contain aluminium, in which case 0.6≤x1≤0.8, 0.1≤y1≤0.39, 0.01≤z1≤0.03, and 0≤w1≤0.29 may be satisfied, and, for example, 0.6≤ x1≤0.8, 0.1≤y1≤0.39, 0.01<z1≤0.03, and 0≤w1≤0.29 may be satisfied.

In some embodiments, in Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤ 0.30, 0.1≤y1≤0.29, 0.15≤y1≤0.39, or 0.2≤y1≤0.3; 0.01≤z1≤0.025, 0.01<z1≤0.02, or 0.01<z1≤0.019; and 0≤w1≤0.28, 0≤w1≤0.27, 0≤w1≤0.26, 0≤w1≤0.25, 0≤w1≤0.24, 0 ≤w1≤0.23, 0≤w1≤0.22, 0≤w1≤0.21, 0≤w1≤0.2, 0≤w1≤0.15, 0≤w1≤0.1, or 0≤w1≤ 0.09.

In some embodiments, the lithium nickel-manganese-based composite oxide may not include (e.g., may exclude) cobalt or include a small amount of cobalt and a cobalt content (e.g., amount) may be about 0 mol% to about 0.01 mol% based on 100 mol% of a total metal in the lithium nickel-manganese-based composite oxide excluding lithium.

The core particles may be in the form of secondary particles made by agglomerating a plurality of primary particles. The secondary particles may be spherical, elliptical, polyhedral, or irregular in shape, and the primary particles may be spherical, elliptical, plate-shaped, and/or a (e.g., any suitable) combination thereof.

The core particle is susceptible to chemical attacks from components in an electrolyte, if (e.g., when) a battery is operated under high-voltage or high-temperature conditions, and side reactions with the electrolyte may occur, resulting in an increased amount of gas generation and thereby, deteriorated battery cycle-life and safety. These problems may be solved by introducing a coating layer according to one or more embodiments which will be described in more detail later.

### Coating Layer

The Al content (e.g., amount) in the coating layer is about 0.5 mol% to about 1.5 mol%, for example, about 0.6 mol% to about 1.4 mol%, about 0.7 mol% to about 1.3 mol%, or about 0.8 mol% to about 1.2 mol% based on 100 mol% of a total metal excluding lithium in the positive electrode active material. This Al content (e.g., amount) refers only to the content (e.g., amount) of aluminium included in the coating layer, separately from (not counting for) the aluminium included within the core particle. The aluminium content (e.g., amount) in the coating layer can be measured, for example, through SEM-EDS analysis of the surface or cross-section of the positive electrode active material. If (e.g., when) the aluminium content (e.g., amount) in the coating layer satisfies these ranges, the coating layer may have a substantially uniform and thin thickness, which may not increase resistance of the positive electrode active material and effectively suppress or reduce a side reaction with the electrolyte and thereby, improve cycle-life characteristics of a rechargeable lithium battery under high-voltage and high-temperature conditions. For example, if the aluminium content (e.g., amount) of the coating layer is excessive (e.g., greater than about 1.5 mol%), a substantially uniform coating layer may not be formed or resistance may increase, which may reduce charge/discharge efficiency and cycle-life characteristics, and if the aluminium content (e.g., amount) of the coating layer is too small (e.g., lower than about 0.5 mol%), a coating layer of an appropriate or suitable thickness may not be formed and an effect of suppressing or reducing side reactions with the electrolyte may be reduced.

The coating layer according to one or more embodiments has a fiber shape (e.g., in a form of fibers, having a fibrous structure, etc.). This coating layer may, for example, be in the form of a mesh or spider web shape. The mesh-shaped coating layer may be formed on the entire surface of the core particle, and thus it can be described as that the coating layer surrounds the entire surface of the core particle. This is distinct from a structure in which only a portion of the surface of the core particle is coated locally.

The coating layer can be formed to be very thin and substantially uniform in thickness while containing a fiber shape (e.g., in a form of fibers, having a fibrous structure, etc.), and therefore the positive electrode active material does not increase resistance or decrease capacity (e.g., due to the inclusion of the coating layer), while it improves structural stability, effectively suppresses side reactions with electrolytes, reduces the amount of gas generated under high-voltage and high-temperature conditions, and achieves long cycle-life characteristics.

The coating layer may have a thickness of about 5 nm to about 200 nm, for example, about 10 nm to about 200 nm, about 20 nm to about 200 nm, about 30 nm to about 150 nm, about 40 nm to about 100 nm, or about 50 nm to about 80 nm. If the coating layer satisfies these thickness ranges, the structural stability of the positive electrode active material may be improved without increasing resistance or reducing capacity due to the coating layer, and the side reaction with the electrolyte may be effectively suppressed or reduced. The thickness of the coating layer may be measured through, for example, scanning electron microscope (SEM), transmission electron microscopy (TEM), time-of-flight secondary ion mass spectrometry (TOF-SIMS), X-ray photoelectron spectroscopy (XPS), or energy dispersive X-ray spectroscopy (EDS) analysis, and, for example, the thickness of the coating layer may be measured through a SEM-EDS analysis image of the cross-section of the positive electrode active material.

According to one or more embodiments, the coating layer may be thin and substantially uniform in thickness, at the level of tens to hundreds of nanometers. For example, the deviation in coating layer thickness within one positive electrode active material particle may be less than or equal to about 20%, less than or equal to about 18%, or less than or equal to about 15%. Herein, the deviation in coating layer thickness refers to the deviation of the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one measured data and the arithmetic average value by the arithmetic average value and multiplying by 100. The fact that the deviation or standard deviation of the coating layer thickness satisfies the above ranges indicates that a coating layer of substantially uniform thickness is formed (e.g., well formed) in the form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

The coating layer may include, for example, a layered aluminium compound, for example, aluminium oxide, lithium-aluminium oxide, LiAlO₂, and/or a (e.g., any suitable) combination thereof. In one or more embodiments, the coating layer may include LiAlO₂.

The coating layer may further contain nickel, manganese, and/or a (e.g., any suitable) combination thereof in addition to aluminium.

In one or more embodiments, on the surface of the positive electrode active material according to one or more embodiments, the Al content (e.g., amount) based on 100 at% (atomic percent) of a total metal on the surface of the positive electrode active material excluding lithium may be about 45 at% to about 55 at%, and by being coated with Al at such a high content (e.g., amount), structural stability of the positive electrode active material may be improved. The Al content (e.g., amount) on the surface of the positive electrode active material can be measured, for example, through energy dispersive X-ray spectroscopy (EDS).

### Grain Boundary Coating Portion

In one or more embodiments, during the coating layer formation process, aluminium may diffuse into the core particles. Accordingly, the positive electrode active material according to one or more embodiments may further include a grain boundary coating portion including aluminium and arranged on the surface of the primary particles in the internal portion of the secondary particles. Herein, the secondary particle refers to the core particle, and the internal portion of the secondary particle may refer to the entire internal portion excluding the surface of the secondary particle, or may be a region from the center of the secondary particle towards the surface of the secondary particle, up to about 60 length% of the radius of the secondary particle. The grain boundary coating portion is distinct from the coating layer on the surface of the core particle, and refers to the coating portion formed on the surface of the primary particles inside the core particle. The presence of a grain boundary coating portion can be confirmed through SEM-EDS analysis of the cross-section of the positive electrode active material. By forming the grain boundary coating portion, the positive electrode active material can become more structurally stable and its cycle-life characteristics can be improved.

The aluminium content (e.g., amount) in the grain boundary coating portion is not particularly limited, and, for example, the aluminium content (e.g., amount) in the grain boundary coating portion may be less than the aluminium content (e.g., amount) in the coating layer.

In some embodiments, the grain boundary coating portion may further include nickel, magnesium, yttrium, and/or a (e.g., any suitable) combination thereof in addition to aluminium.

The average particle diameter (D₅₀) of the positive electrode active material according to one or more embodiments is not particularly limited, but may be, for example, about 1 µm to about 25 µm, about 5 µm to about 25 µm, about 10 µm to about 25 µm, about 11 µm to about 20 µm, or about 12 µm to about 18 µm. As used herein, if (e.g., when) a definition is not otherwise provided, the average particle diameter refers to a diameter (D₅₀) of particles having a cumulative volume of 50 volume% in the particle size distribution that is obtained by measuring the size (diameter or length of the major axis) of about 20 particles at random in a scanning electron microscope image for positive electrode active materials. If the average particle diameter of the positive electrode active material satisfies the above ranges, high capacity and long cycle-life can be realized and it can be suitable or advantageous to form a coating layer according to one or more embodiments.

Additionally, in one or more embodiments, a positive electrode active material may not include (e.g., may exclude) sodium. In general, sodium ions can be used in the preparing process of a positive electrode active material, but according to the preparing method described in more detail later, core particles with a stable structure and a coating layer of substantially uniform thickness can be formed without utilizing sodium ions.

### Method of Preparing Positive Electrode Active Material

In one or more embodiments, a method of preparing a positive electrode active material includes (i) preparing core particles (e.g., each) including layered lithium nickel-manganese-based composite oxide having a nickel content (e.g., amount) of greater than or equal to about 60 mol% based on 100 mol% of a total metal in the lithium nickel-manganese-based composite oxide excluding lithium, and having a residual lithium content (e.g., amount) on the surface of about 0.15 wt% to about 0.25 wt%, (ii) adding aluminium sulfate to an aqueous solvent and mixing to prepare a coating solution, (iii) adding core particles to the coating solution and mixing to prepare a mixed solution with a pH of about 5.5 to about 7.5, and (iv) removing the aqueous solvent from the mixed solution, drying and performing heat treatment on the resulting product to obtain a positive electrode active material. The aforementioned positive electrode active material may be manufactured through the above method.

First, the layered lithium nickel-manganese-based composite oxide may be prepared, for example, by mixing nickel-manganese-based composite hydroxide and a lithium raw material and performing a first heat treatment. The nickel-manganese-based composite hydroxide may be a precursor of core particles and may be in the form of secondary particles in which a plurality of primary particles are agglomerated. The nickel-manganese-based composite hydroxide (e.g. nickel-manganese-aluminium-based composite hydroxide) may be prepared by a general coprecipitation method.

In the nickel-manganese-based composite hydroxide, the nickel content (e.g., amount) is greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. If (e.g., when) the nickel content (e.g., amount) satisfies the above ranges, high capacity can be achieved and structural stability can be increased even if the cobalt content (e.g., amount) is reduced.

The manganese content (e.g., amount) in the nickel-manganese-based composite hydroxide may be greater than or equal to about 10 mol%, greater than or equal to about 15 mol%, for example, about 15 mol% to about 40 mol%, about 15 mol% to about 39 mol%, about 15 mol% to about 35 mol%, about 15 mol% to about 30 mol%, or about 20 mol% to about 30 mol%, based on 100 mol% of a total metal in the nickel-manganese-based composite hydroxide.

In addition, if (e.g., when) the nickel-manganese-based composite hydroxide further contains aluminium, the aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-based composite hydroxide. If the manganese and aluminium contents of the composite hydroxide satisfy the above respective ranges, high capacity may be realized while structural stability of the positive electrode active material may be increased, and production price may be lowered to increase economic efficiency.

In a method for preparing a positive electrode active material according to one or more embodiments, in the preparation of core particles, aluminium is not additionally doped, but an aluminium raw material may be used to prepare a precursor, so that a nickel-manganese-aluminium-based composite hydroxide, in which aluminium is uniformly (e.g., substantially uniformly) dispersed in the structure, may be used as the precursor. If (e.g., when) such a precursor is used, the positive electrode active material may stably maintain a layered structure without cobalt despite repeated charges and discharges, and aluminium byproducts or aluminium aggregates may not be formed, thereby improving capacity and efficiency characteristics and cycle-life characteristics of the positive electrode active material.

In the nickel-manganese-based composite hydroxide, the cobalt content (e.g., amount) may be less than or equal to about 0.01 mol%, less than or equal to about 0.005 mol%, or less than or equal to about 0.001 mol% based on 100 mol% of a total metal in the nickel-manganese-based composite hydroxide. This nickel-manganese-based composite hydroxide may be economical as it avoids or reduces the increase in unit cost caused by cobalt, maximizes or increases capacity, and improves structural stability.

As an example, the nickel-manganese-based composite hydroxide may be represented by Chemical Formula 2.

Chemical Formula 2 Niₓ₂Mn_{y2}Al_{z2}M²_{w2}(OH)₂

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² is one or more elements selected from among B, Ba, Ca, Ce, Cr, Fe, Mg, Mo, Nb, Si, Sn, Sr, Ti, V, W, Y, and Zr.

In some embodiments, in Chemical Formula 2, for example, 0.6≤x2≤0.8, 0.1 ≤y2≤0.39, 0.01≤z2≤0.03, 0≤w2≤0.29.

The nickel-manganese-based composite hydroxide may be in the form of particles and the average particle diameter (D₅₀) of the particles may be about 1 µm to about 25 µm, about 5 µm to about 20 µm, about 10 µm to about 20 µm, about 11 µm to about 18 µm, or about 12 µm to about 15 µm.

The nickel-manganese-based composite hydroxide and the lithium raw material may be mixed in a molar ratio of about 1:0.9 to about 1:1.8, for example, about 1:0.9 to about 1:1.5 or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the heat treatment, lithium nickel-manganese-based composite oxide may be obtained. The obtained composite oxide is substantially the same as that described for the core particles in the positive electrode active material part.

The core particles containing the layered lithium nickel-manganese-based composite oxide according to one or more embodiments may have a residual lithium content (e.g., amount) in a range of about 0.15 wt% to about 0.25 wt% on the surface based on a total weight (100 wt%) of the core particles. For example, a content (e.g., amount) of LiOH remaining on the surface of the core particles may be about 0.3 wt% to about 0.5 wt%, and a content (e.g., amount) of Li₂CO₃ remaining on the surface of the core particles may be about 0.25 wt% to about 0.6 wt%.

Because such a layered lithium nickel-manganese-based composite oxide may have significantly different residual lithium contents on the particle surface and different various characteristics from oxides with a different composition, for example, lithium nickel-cobalt-manganese-based composite oxide, lithium nickel-cobalt-aluminium-based composite oxide, lithium cobalt-based oxide, and/or the like, it is not likely or impossible to form a satisfactory coating layer in the form of a substantially uniform film in a related art coating method. A method according to one or more embodiments is capable of very uniformly (e.g., substantially uniformly) coating Al on the particle surface of the layered lithium nickel-manganese-based composite oxide having the above residual lithium contents.

In one or more embodiments, after first preparing a coating solution by adding aluminium sulfate to an aqueous solvent and mixing them, the core particles are added to this coating solution and then, mixed therewith to prepare a mixed solution with a pH in a range of about 5.5 to about 7.5. This is a salt-dissolution wet coating method and a pre-addition method of completely dissolving a salt, a coating raw material, in a solvent first and then, adding active material particles thereto.

The aqueous solvent may include distilled water, an alcohol-based solvent, and/or a (e.g., any suitable) combination thereof.

The aluminium sulfate may be an optimal or suitable raw material for forming the coating layer according to one or more embodiments. An Al content (e.g., amount) in the aluminium sulfate may be designed to be about 0.5 mol% to about 1.5 mol%, for example, about 0.6 mol% to about 1.4 mol%, about 0.7 mol% to about 1.3 mol%, or about 0.8 mol% to about 1.2 mol% based on 100 mol% of a total metal excluding lithium in the finally obtained positive electrode active material. If the Al coating content (e.g., amount) is designed within these ranges, the coating layer may be formed to have a thin and substantially uniform thickness of tens to hundreds of nanometers, reducing an amount of gas generated by rechargeable lithium batteries under high voltage or high-temperature operation conditions and improving high-capacity and long cycle-life characteristics.

The adding and mixing of the aluminium sulfate to the aqueous solvent may be performed for about 1 minute to about 60 minutes, for example, about 3 minutes to about 30 minutes, or about 5 minutes to about 10 minutes. In addition, the mixing may be performed at a speed of about 100 rpm to about 800 rpm, for example, about 200 rpm to about 600 rpm, or about 250 rpm to about 500 rpm. Under these conditions, the aluminium sulfate is completely dissolved in the aqueous solvent to obtain a colorless transparent coating solution, and this coating solution may be used to effectively form the substantially uniform aluminium coating layer according to one or more embodiments. The coating solution, which completed with the mixing, may have, for example, a pH of about 1.5 to about 3.5, for example, about 2.0 to about 3.4, about 2.5 to about 3.3, about 2.7 to about 3.3, or about 2.9 to about 3.2.

In the adding of the core particles to the prepared coating solution, while stirring the coating solution, the core particles are added thereto to increase the coating quality.

In addition, the core particles may be added to the coating solution at a speed of about 30 seconds/about 500 g to about 2 minutes/about 500 g, for example, about 30 seconds/about 500 g to about 1.5 minutes/about 500 g, and/or the like. The speed of adding the core particles may be appropriately or suitably adjusted to control the pH of a supernatant after completing the coating, inducing effective formation of the substantially uniform Al coating layer according to one or more embodiments. If the speed of adding the core particles is too fast, after completing the coating, pH of the supernatant may be increased and become basic, resultantly forming a non-uniform coating layer. In addition, if the speed of adding the core particles is too slow, pH of the supernatant may be lowered and become more acidic, still forming a non-uniform coating layer.

After the core particles are all added to the coating solution, the stirring may be performed for about 15 minutes to about 60 minutes, for example, about 20 minutes to about 50 minutes, or about 30 minutes to about 45 minutes. Time taken from the starting of the addition of the core particles to the coating solution to the completion of the stirring, that is, the coating reaction time, may be adjusted within about 1 hour.

In one or more embodiments, if (e.g., when) the adding and mixing of the core particles to the coating solution is stopped, that is, the pH of the supernatant after completing the mixing or the coating, may be in a range of about 5.5 to about 7.5. If the pH of the supernatant is less than about 5.5, the acidity becomes stronger, wherein a coating layer containing a fiber shape (e.g., in a form of fibers, having a fibrous structure, etc.) may not be formed, and the substantially uniform Al coating layer may not be finally formed either. In addition, if the pH of the supernatant is greater than about 7.5, the basicity becomes stronger, wherein the coating layer containing a fiber shape (e.g., in a form of fibers, having a fibrous structure, etc.) may not be formed, and the substantially uniform Al coating layer may also be difficult to form.

After removing the aqueous solvent from the mixed solution, a product therefrom may be, for example, dried at about 40 °C to about 240 °C, about 100 °C to about 220 °C, or about 150 °C to about 200 °C and, for example, under a vacuum condition, and under these conditions a satisfactory coated product may be obtained.

The dried product after removing the aqueous solvent from the mixed solution may be referred to as a coated product. The coated product may include the core particles and the Al-containing coating layer on the surface of the core particles, wherein the Al-containing coating layer may be in the form of a mesh or spider web. Such a mesh may be continuously formed over the entire surface of the core particles. The mesh-shaped coating layer may wrap the core particles with a very thin and substantially uniform thickness to strengthen the surface of the positive electrode active material and improve structural stability and thereby, enhancing high-temperature and high-voltage characteristics.

After mixing the nickel-manganese-based composite hydroxide and the lithium raw material, the heat treatment of the mixture may be referred to as a primary heat treatment, while the heat treatment of the coated product may be referred to as a secondary heat treatment. The second heat treatment may be performed in an oxygen atmosphere at a temperature range of about 700 °C to about 850 °C, about 750 °C to about 840 °C, or about 800 °C to about 830 °C for about 2 hours to about 20 hours, or about 3 to about 10 hours. Additionally, the second heat treatment temperature may be lower than the first heat treatment temperature, and the second heat treatment time may be the same as or shorter than the first heat treatment time. The desired or suitable coating layer can be obtained by performing a second heat treatment under these conditions.

The obtained positive electrode active material includes core particles including a layered lithium nickel-manganese-based composite oxide having a nickel content (e.g., amount) of greater than or equal to about 60 mol% based on 100 mol% of a total metal in the layered lithium nickel-manganese-based composite oxide excluding lithium, and a coating layer located on the surface of the core particles and including aluminium oxide, lithium-aluminium oxide, and/or a (e.g., any suitable) combination thereof.

### Positive Electrode

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the positive electrode active materials described above. Additionally, the positive electrode active material layer may optionally further include a binder, a conductive material, and/or a (e.g., any suitable) combination thereof.

According to one or more embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. If (e.g., when) applying the positive electrode active material according to one or more embodiments, it is suitable or advantageous to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

### Conductive Material

The conductive material is included to provide electrode conductivity and any suitable electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture (e.g., combination) thereof.

Each content (e.g., amount) of the binder and the conductive material may be about 0.5 wt% to about 5 wt% based on 100 wt% of the positive electrode active material layer.

The positive electrode current collector may include Al, but the present disclosure is not limited thereto.

### Rechargeable Lithium Battery

According to some embodiments, a rechargeable lithium battery includes the aforementioned positive electrode, a negative electrode, and an electrolyte. As an example, the rechargeable lithium battery may include a positive electrode, a negative electrode, a separator between the positive electrode and the negative electrode, and an electrolyte solution.

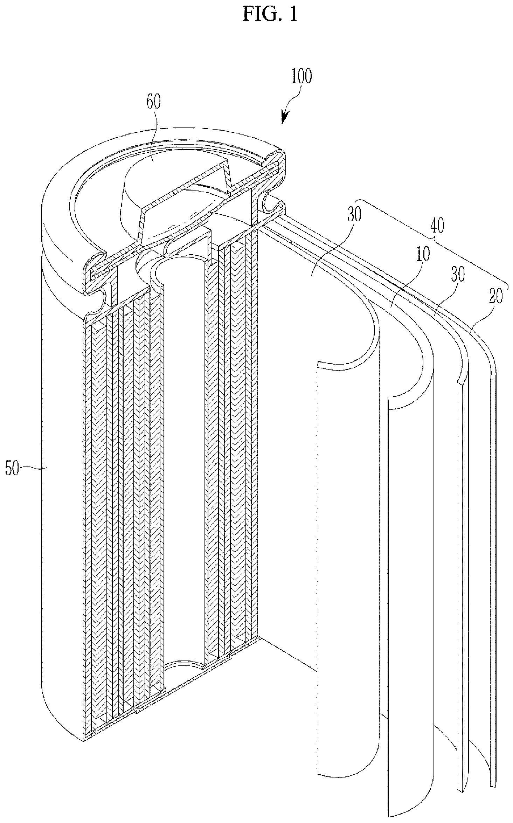

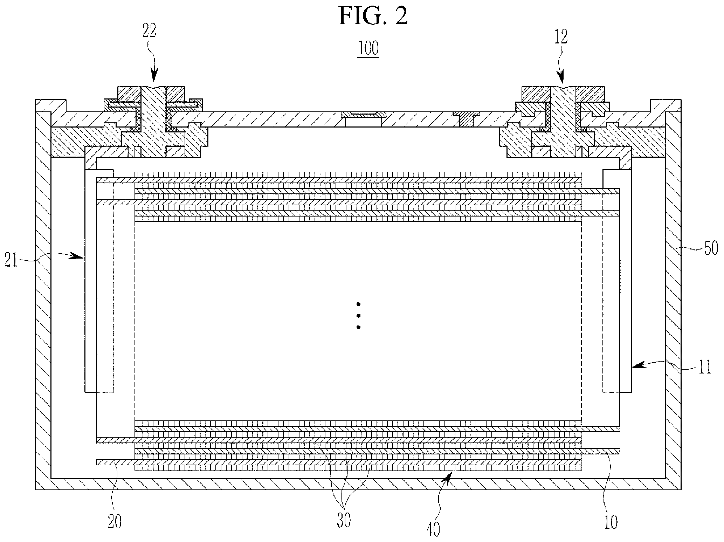

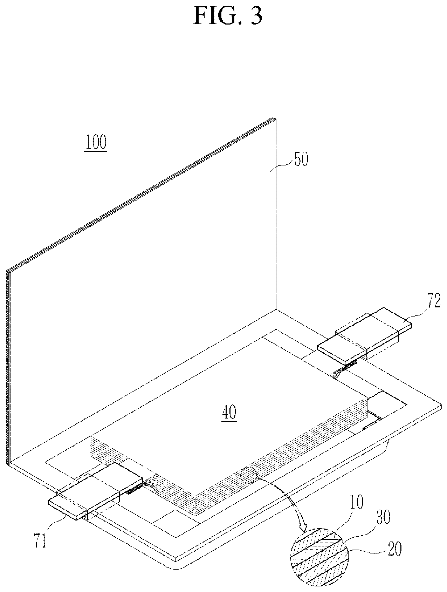

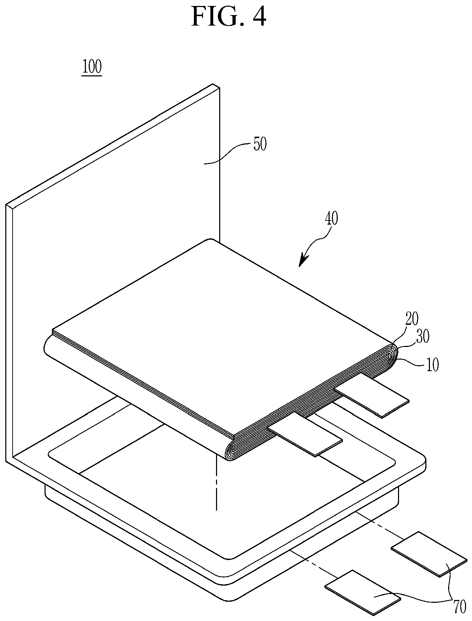

The rechargeable lithium battery may be classified into cylindrical, prismatic, pouch, coin, and/or the like, depending on the shape. FIGs. 1 to 4 are schematic diagrams showing the rechargeable lithium battery according to one or more embodiments, where FIG. 1 is a cylindrical battery, FIG. 2 is a prismatic battery, and FIGs. 3 and 4 are a pouch-shaped battery. Referring to FIGs. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGs. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

A rechargeable lithium battery according to one or more embodiments may be rechargeable at a high voltage, and/or may be suitable for being driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V. By applying the positive electrode active material according to one or more embodiments, the rechargeable lithium battery can significantly reduce an amount of gas generated even if (e.g., when) charged at high voltage and can achieve high capacity and long cycle-life characteristics.

### Negative Electrode

The negative electrode may include a current collector and a negative electrode active material layer on the current collector, and may further include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOₓ (0 < x ≤ 2, e.g., SnO₂), a Sn alloy, and/or a (e.g., any suitable)

### combination thereof.

The silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In one or more embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere (well adhere) the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber (e.g., taken the form of a fiber), and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may include a non-aqueous organic solvent and a lithium salt.

The non-aqueous organic solvent serves as a medium for transmitting (e.g., transporting) ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance, which is widely suitable to those working in the field.

If (e.g., when) utilizing a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are each independently integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte solution has appropriate or suitable ionic conductivity and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, a multilayer film of two or more layers thereof, a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), or a copolymer or mixture of two or more thereof.

The porous substrate may have a thickness of about 1 micrometer (µm) to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1.05 and then, primarily heat-treated at 845 °C for 8 hours under an oxygen atmosphere to prepare a lithium nickel-manganese-based composite oxide having a composition of Li_{1.05}Ni_{0.75}Mn_{0.23}Al_{0.02}O₂ in the form of secondary particles with an average particle diameter (D₅₀) of about 14 µm.

The prepared lithium nickel-manganese-based composite oxide was measured with respect to residual lithium by utilizing an HCl titration method to calculate the content (e.g., amount) of each of Li₂CO₃ and LiOH from EP1 (Equivalence Point 1) and EP2 (Equivalence Point 2) according to injection of HCl and also, calculate total residual lithium from LiOH content and Li₂CO₃ content. As a result, LiOH was confirmed to be 4500 ppm, Li₂CO₃ was confirmed to be 5500 ppm, and the residual lithium was confirmed to be 2340 ppm. Here, the ppm unit refer 10⁻⁴ wt%.

A coating solution was prepared by adding 600 g of distilled water and aluminium sulfate to a 1 L reactor, and then stirring them (the mixture) at about 350 rpm for about 5 minutes to dissolve the salt. The coating solution, in which the salt was completely dissolved, was confirmed to be colorless and transparent. To the coating solution, with continuously stirring, 500 g of the lithium nickel-manganese-based composite oxide was added for 1.5 minutes and then, the stirring was continued for 45 minutes or so. Herein, an aluminium content (e.g., amount) in the aluminium sulfate was designed to be 1.0 mol% based on 100 mol% of a total metal excluding lithium in a final positive electrode active material. If (e.g., when) the stirring was completed, a supernatant thereof had a pH of 5.5.

After removing the solvent from the mixed solution with an aspirator and filter press, a coated product was obtained through vacuum drying at 190 °C.

The coated product was secondarily heat-treated at 825 °C for 8 hours under the oxygen atmosphere to prepare a final positive electrode active material.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and then, dried and compressed to manufacture a positive electrode. At this time, a loading level of the positive electrode active material layer was 10 mg/cm², and a density of the finally compressed positive electrode was about 3.4 g/cc.

97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.

A polytetrafluoroethylene separator was used, and an electrolyte solution prepared by dissolving 1 M LiPF₆ in a mixed solvent of ethylene carbonate and dimethyl carbonate in a volume ratio of 3:7 was used to manufacture a rechargeable lithium battery cell in a common method.

### Example 2

A positive electrode active material and a rechargeable lithium battery cell were manufactured in substantially the same manner as in Example 1 except that the positive electrode active material was prepared by adding the lithium nickel-manganese-based composite oxide to the coating solution at a higher speed of about 1 minute (e.g., 500 g of the lithium nickel-manganese-based composite oxide was added into the coating solution for 1 minute instead of 1.5 minutes).

In Example 2, if (e.g., when) the coating was completed, a supernatant thereof had a pH of 6.5.

### Example 3

A positive electrode active material and a rechargeable lithium battery cell were manufactured in substantially the same manner as in Example 1 except that the positive electrode active material was prepared by adding the lithium nickel-manganese-based composite oxide to the coating solution at a much higher speed of about 30 seconds (e.g., 500 g of the lithium nickel-manganese-based composite oxide was added into the coating solution for 30 seconds instead of 1.5 minutes).

In Example 3, if (e.g., when) the coating was completed, a supernatant thereof had a pH of 7.5.

### Comparative Example 1

A positive electrode active material and a rechargeable lithium battery cell were manufactured in substantially the same manner as in Example 1 except that the positive electrode active material was prepared by utilizing the lithium nickel-manganese-based composite oxide of Example 1 and dry-coating the aluminium oxide.

For example, the Al coating was performed by mixing the lithium nickel-manganese-based composite oxide of Example 1 with aluminium oxide powder and then, heat-treating them at 825°C for 8 hours under an oxygen atmosphere. Herein, an aluminium content (e.g., amount) in the aluminium oxide was set to be the same of 1.0 mol% based on 100 mol% of the total metal excluding lithium in the final positive electrode active material as in Example 1.

### Comparative Example 2

A positive electrode active material and a rechargeable lithium battery cell were manufactured substantially the same as in Example 2 except that aluminium nitrate was used instead of the aluminium sulfate.

As for Comparative Example 2, if (e.g., when) the coating was completed, a supernatant thereof had a pH of 8.5.

### Comparative Example 3-1

A positive electrode active material and a rechargeable lithium battery cell were manufactured in substantially the same manner as in Example 1 except that the positive electrode active material was prepared by adding the lithium nickel-manganese-based composite oxide to the coating solution at a lower speed for about 3 minutes (e.g., 500 g of the lithium nickel-manganese-based composite oxide was added into the coating solution for 3 minute instead of 1.5 minutes).

As for Comparative Example 3-1, if (e.g., when) the coating was completed, a supernatant thereof had a pH of 4.5.

### Comparative Example 3-2

A positive electrode active material and a rechargeable lithium battery cell were manufactured in substantially the same manner as in Example 1 except that the positive electrode active material was prepared by adding the lithium nickel-manganese-based composite oxide to the coating solution at a higher speed of about 5 seconds (e.g., 500 g of the lithium nickel-manganese-based composite oxide was added into the coating solution for 5 seconds instead of 1.5 minutes).

As for Comparative Example 3-2, if (e.g., when) the coating was completed, a supernatant thereof had a pH of 8.5.

### Comparative Example 3-3

A positive electrode active material and a rechargeable lithium battery cell were manufactured in substantially the same manner as in Example 2 except that the positive electrode active material was prepared in a post addition method of first adding the lithium nickel-manganese-based composite oxide to distilled water and then, adding the aluminium sulfate later thereto, while stirring the mixture, and then, stirring the obtained mixture for 45 minutes.

As for Comparative Example 3-3, if (e.g., when) the coating was completed, a supernatant thereof had a pH of 6.5.

### Example 4

A positive electrode active material and a rechargeable lithium battery cell were manufactured in substantially the same manner as in Example 1 except that the primary heat treatment was performed at 855°C. The lithium nickel-manganese-based composite oxide of Example 4 had a LiOH content (e.g., amount) of 4000 ppm, a Li₂CO₃ content (e.g., amount) of 3000 ppm, and a residual lithium content (e.g., amount) of 1720 ppm on the surface of the secondary particle.

As for Example 4, if (e.g., when) the coating was completed, a supernatant thereof had a pH of 6.5.

### Comparative Example 4

A positive electrode active material and a rechargeable lithium battery cell were manufactured in substantially the same manner as in Example 2 except that the positive electrode active material was prepared by utilizing lithium nickel-cobalt-aluminium-based oxide having a composition of LiNi_{0.945}Co_{0.04}Al_{0.015}O₂ in the form of secondary particles with an average particle diameter (D₅₀) of about 14 µm (micron) instead of the lithium nickel-manganese-based composite oxide. The lithium nickel-cobalt-aluminium-based composite oxide of Comparative Example 4 had a LiOH content (e.g., amount) of 6000 ppm, a Li₂CO₃ content (e.g., amount) of 7000 ppm, and a residual lithium content (e.g., amount) of 3060 ppm on the surface of the secondary particle.

As for Comparative Example 4, if (e.g., when) the coating was completed, a supernatant thereof had a pH of 12.

### Comparative Example 5

A positive electrode active material and a rechargeable lithium battery cell were manufactured in substantially the same manner as in Example 2 except that the positive electrode active material was prepared by utilizing lithium cobalt-based oxide having a composition of LiCoO₂ in the form of secondary particles with an average particle diameter (D₅₀) of about 17 µm instead of the lithium nickel-manganese-based composite oxide. The lithium cobalt-based composite oxide of Comparative Example 5 had a LiOH content (e.g., amount) of 850 ppm, a Li₂CO₃ content (e.g., amount) of 230 ppm, and a residual lithium content (e.g., amount) of 290 ppm on the surface of the secondary particle.

As for Comparative Example 5, if (e.g., when) the coating was completed, a supernatant thereof had a pH of 3.5.

For better understanding, design details of the examples and the comparative examples are shown in Table 1.

**(Table 1)**

| | Residual lithium (ppm) after first heat treatment | | | Coating method | Coating raw material | Core input speed (min/50 0 g) | pH of supernat ant after coating |
|---|---|---|---|---|---|---|---|
| | LiOH | Li₂CO₃ | Total Li | | | | |
| Comparative Example 1 | 4500 | 5500 | 2340 | dry | aluminium oxide (Al₂O₃) | - | - |
| Comparative Example 2 | | | | wet (salt-dissolved, pre-addition) | aluminium nitrate (Al(NO₃)_{3·} 9H₂O) | 1.5 | 8.5 |
| Comparative Example 3-1 | | | | | aluminium sulfate (Al₂(SO₄)_{3·} 14-18H₂O | 3 | 4.5 |
| Example 1 | | | | | | 1.5 | 5.5 |
| Example 2 | | | | | | 1 | 6.5 |
| Example 3 | | | | | | 30 sec/ 500 g | 7.5 |
| Comparative Example 3-2 | | | | | | 5 sec/ 500 g | 8.5 |
| Comparative Example 3-3 | | | | wet (salt-dissolved, post-addition) | | 1.5 | 6.5 |
| Example 4 | 4000 | 3000 | 1720 | wet (salt-dissolved, | | 1.5 | 6.5 |
| Comparative Example 4 | 6000 | 7000 | 3060 | | | 1.5 | 12 |
| Comparative Example 5 | 850 | 230 | 290 | pre-addition) | | 1.5 | 3.5 |

### Evaluation Example 1: Coating Quality Evaluation through SEM and EDS-Mapping

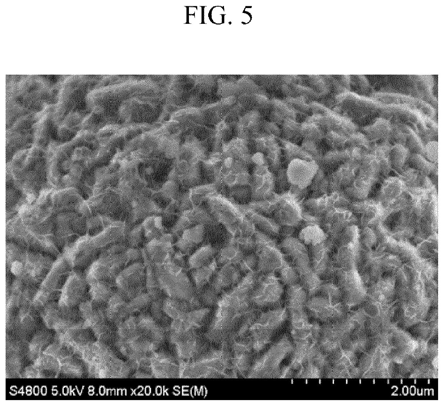

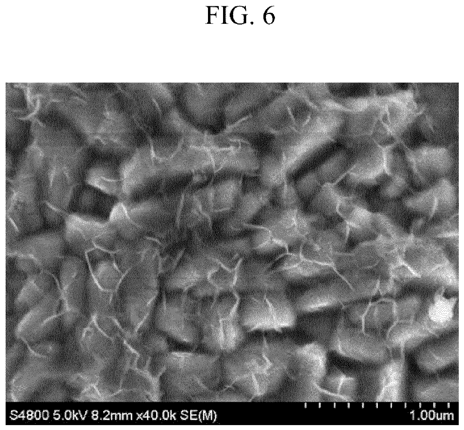

FIG. 5 is an SEM image showing the surface of the coated product dried after the coating in Example 1. FIG. 6 is an enlarged image of the image of FIG. 5. Referring to FIGs. 5 and 6, on the surface of the secondary particles of Example 1, the Al coating layer was formed in the form of a mesh or spider web containing a fiber shape (e.g., in a form of fibers, having a fibrous structure, etc.).

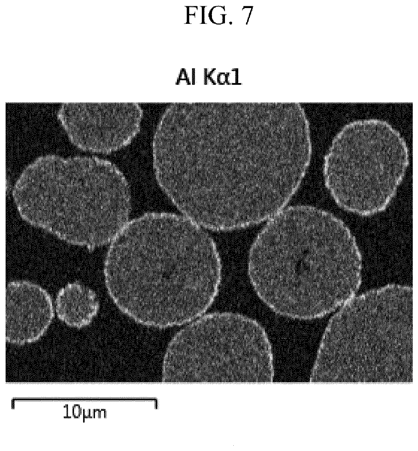

FIG. 7 is an EDS analysis image showing a cross-section obtained by cutting the final positive electrode active material of Example 1. Referring to FIG. 7, the Al coating layer was formed to have a uniform (e.g., substantially uniform) thickness on the surface of the secondary particle of Example 1.

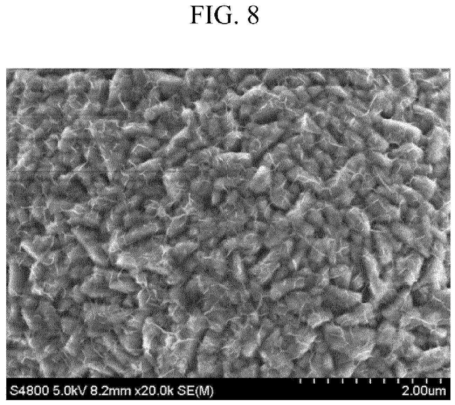

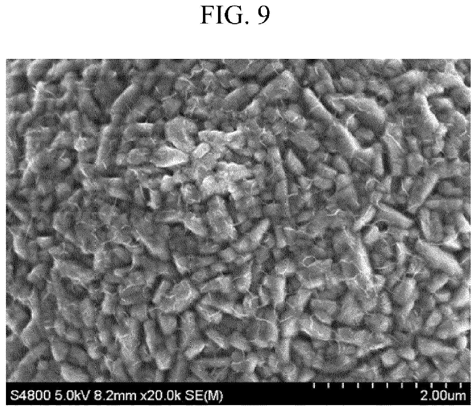

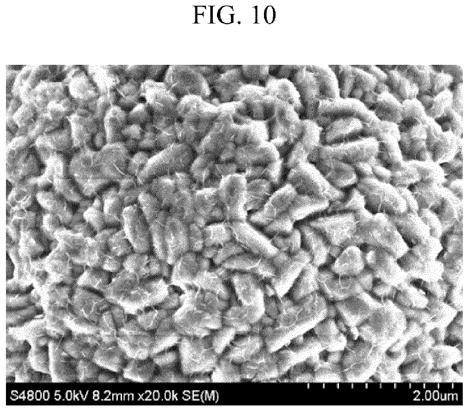

FIG. 8 is an SEM image of the surface of the coated product of Example 2, FIG. 9 is an SEM image of the surface of the coated product of Example 3, and FIG. 10 is an SEM image of the surface of the coated product of Example 4. Referring to FIGs. 8 to 10, the examples whose supernatant had a pH in a range of 5.5 to 7.5 after the coating exhibited that the Al coating layer in the form of a mesh or spider web was uniformly (e.g., substantially uniformly) formed on the surface of the positive electrode active material.

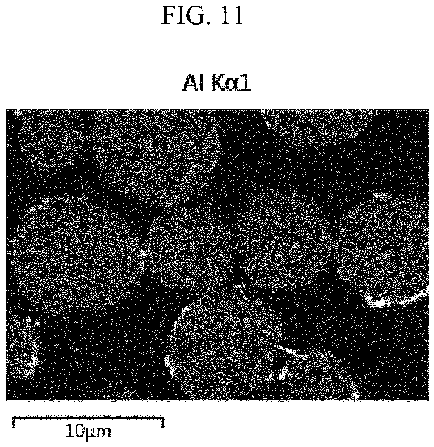

FIG. 11 is an EDS analysis image showing a cross-section of the positive electrode active material of Comparative Example 1, in which Al was highlighted. Referring to FIG. 11, Comparative Example 1 to which the dry coating was applied, exhibited that the Al coating layer was not uniformly formed.

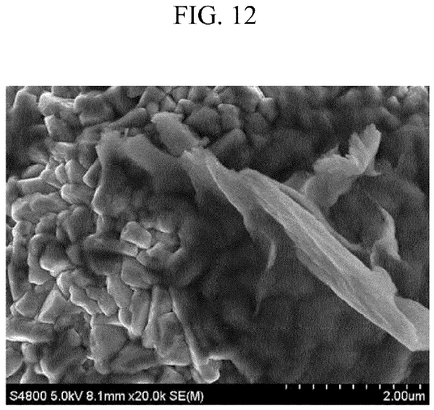

FIG. 12 is an SEM image showing the coated product surface of Comparative Example 2. Referring to FIG. 12, Comparative Example 2 utilizing aluminium nitrate as a coating raw material exhibited that a non-uniform Al coating layer was formed on the surface of the secondary particle.

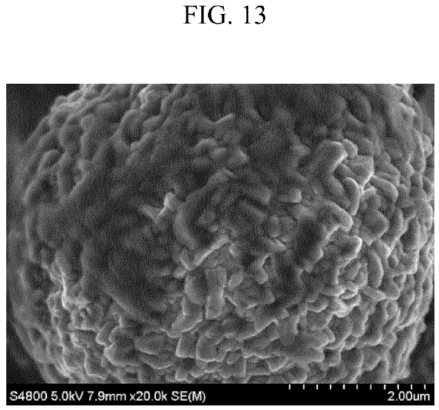

FIG. 13 is an SEM image showing the coated product surface of Comparative Example 3-1. Referring to FIG. 13, Comparative Example 3-1 which used aluminium sulfate as a coating raw material and whose supernatant was extremely acidic at a pH level of 4.5 after the coating exhibited that a non-uniform Al coating layer was formed, and no mesh-shaped coating layer was observed.

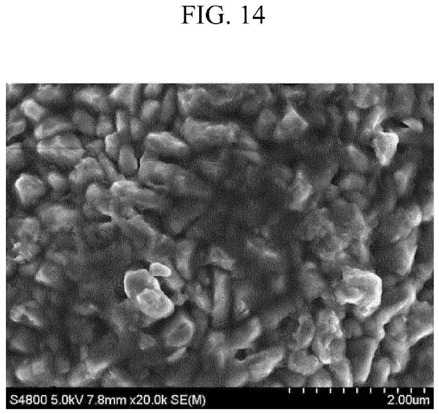

FIG. 14 is an SEM image of the coated product surface of Comparative Example 3-2. Referring to FIG. 14, Comparative Example 3-2 which used aluminium sulfate as a coating raw material and whose supernatant was basic with a pH of 8.5 exhibited that a non-uniform Al coating layer was formed, and no mesh-shaped coating layer was observed.

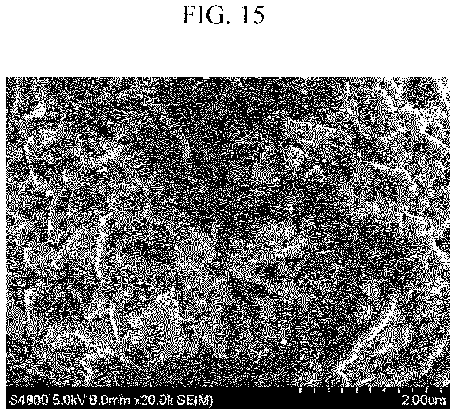

FIG. 15 is an SEM image showing the coated product surface of Comparative Example 3-3. Comparative Example 3-3, in which the coating was performed in the post addition method, exhibited that a non-uniform Al coating layer was formed.

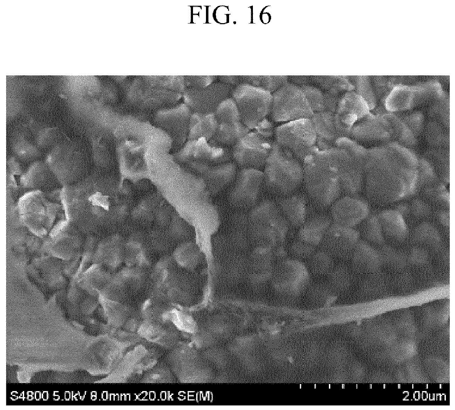

FIG. 16 is an SEM image showing the coated product surface of Comparative Example 4. Referring to FIG. 16, as for Comparative Example 4, which used layered lithium nickel-cobalt-based composite oxide leaving a residual lithium content (e.g., amount) of 3000 ppm or more on the surface instead of the layered lithium nickel-manganese-based composite oxide of one or more embodiments, even though the coating method of one or more embodiments was applied, a non-uniform Al coating layer was formed, and no mesh shape was observed.

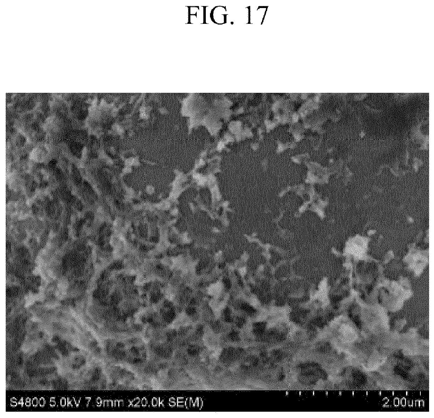

FIG. 17 is an SEM image showing the coated product surface of Comparative Example 5. Referring to FIG. 17, as for Comparative Example 5 utilizing lithium cobalt-based oxide leaving a smaller residual lithium content (e.g., amount) on the surface instead of the layered lithium nickel-manganese-based composite oxide of one or more embodiments, even if the coating method of one or more embodiments was applied thereto, a non-uniform Al coating layer was formed.

### Evaluation Example 2: EP-EDS Analysis

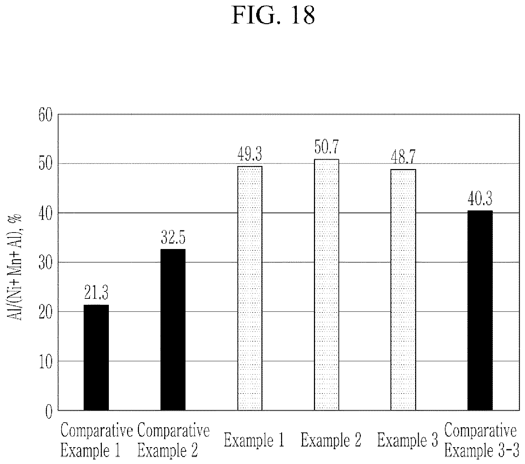

The coated products of Examples 1 to 3 and Comparative Examples 1, 2, and 3-3 were EP-EDS analyzed to calculate a ratio of an Al content (e.g., amount) (at%, atomic percent) to 100 at% of a total content (e.g., amount) of Ni, Mn, and Al (Al/(Ni+Mn+Al)) on the particle surface, and the results are shown in FIG. 18. The EP-EDS is an analysis method that measures the concentration of a specific element at a specific depth by irradiating an electron beam on the surface of a target material. The depth can be controlled by changing the acceleration voltage of the electron beam. In this evaluation example, the EP-EDS was performed using Thermo Fisher's Helios G4 HX under conditions of 3 kV and 0.8 nA.

Referring to FIG. 18, Comparative Example 1, to which the dry coating was applied, exhibited the lowest Al content (e.g., amount) on the surface, Comparative Example 2, to which aluminium nitrate was applied as a coating raw material, and Comparative Example 3-3, to which the post-addition method was applied, each exhibited a lower Al content (e.g., amount) on the surface than Examples 1 to 3.

The examples each exhibited a higher Al content (e.g., amount) ratio of about 45% to 55% to the total metal content (e.g., amount) excluding lithium on the positive electrode active material particle surface (as compared to the comparative examples).

In the context of the present application and unless otherwise defined, the terms "use," "using," and "used" may be considered synonymous with the terms "utilize," "utilizing," and "utilized," respectively.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments. On the contrary, it is intended to cover various modifications and equivalent arrangements included within the scope of the appended claims, and equivalents thereof.

**Reference Numerals**

| | | | |
|---|---|---|---|
| 100: | rechargeable lithium battery. | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

Embodiments are set out in the following clauses:
Clause 1. A positive electrode active material, comprising:
   a plurality of core particles comprising a layered lithium (Li) nickel (Ni)-manganese (Mn)-based composite oxide having a nickel content of greater than or equal to 60 mol% based on 100 mol% of a total metal in the layered lithium nickel-manganese-based composite oxide excluding lithium, and
   a coating layer on a surface of the core particles and comprising aluminium (Al),
   wherein Al in the coating layer is 0.5 mol% to 1.5 mol% in amount based on 100 mol% of the total metal in the positive electrode active material excluding lithium, and
   the coating layer comprises a fibrous structure.
Clause 2. The positive electrode active material of clause 1, wherein
   the coating layer is in a form of a mesh or spider web.
Clause 3. The positive electrode active material of clause 1 or clause 2, wherein
   the coating layer exists continuously on the surface of the core particles.
Clause 4. The positive electrode active material of any one of clauses 1 to 3, wherein
   the coating layer is 5 nm to 200 nm in thickness.
Clause 5. The positive electrode active material of any one of clauses 1 to 4, wherein
   a deviation in a thickness of the coating layer within one positive electrode active material particle is less than or equal to 20%.
Clause 6. The positive electrode active material of any one of clauses 1 to 5, wherein
   the coating layer comprises a layered aluminium compound.
Clause 7. The positive electrode active material of any one of clauses 1 to 6, wherein
   the coating layer comprises aluminium oxide, lithium-aluminium oxide, or a combination thereof.
Clause 8. The positive electrode active material of any one of clauses 1 to 7, wherein
   the coating layer comprises LiAlO₂.
Clause 9. The positive electrode active material of any one of clauses 1 to 8, wherein
   the coating layer further comprises nickel, manganese, or a combination thereof.
Clause 10. The positive electrode active material of any one of clauses 1 to 9, wherein
   Al is 45 at% to 55 at% in amount based on 100 at% of a total metal on the surface of the positive electrode active material excluding lithium, as measured through energy profiling energy dispersive X-ray spectroscopy (EP-EDS) on the surface of the positive electrode active material.
Clause 11. The positive electrode active material of any one of clauses 1 to 10, wherein
   in the layered lithium nickel-manganese-based composite oxide, nickel is 60 mol% to 80 mol% in amount based on 100 mol% of the total metal in the layered lithium nickel-manganese-based composite oxide excluding lithium and manganese is greater than or equal to 10 mol% in amount based on 100 mol% of the total metal in the layered lithium nickel-manganese-based composite oxide excluding lithium.
Clause 12. The positive electrode active material of any one of clauses 1 to 11, wherein
   the layered lithium nickel-manganese-based composite oxide further comprises aluminium, and the aluminium in the core particles is 1 mol% to 3 mol% in amount based on 100 mol% of the total metal in the layered lithium nickel-manganese-based composite oxide excluding lithium.
Clause 13. The positive electrode active material of clause 12, wherein
   a concentration of aluminium in the core particles is uniform.
Clause 14. The positive electrode active material of any one of clauses 1 to 13, wherein
   in the layered lithium nickel-manganese-based composite oxide, cobalt is 0 mol% to 0.01 mol% in amount based on 100 mol% of the total metal in the layered lithium nickel-manganese-based composite oxide excluding lithium.
Clause 15. The positive electrode active material of any one of clauses 1 to 14, wherein
   the layered lithium nickel-manganese-based composite oxide is represented by Chemical Formula 1:

      Chemical Formula 1 Liₐ₁Niₓ₁Mn_{y1}Al_{z1}M¹_{w1}O_{2-b1}X_{b1}

      wherein in Chemical Formula 1,
   0.9≤a1≤1.8, 0.6≤x1≤0.8, 0.1≤y1≤0.4, 0≤z1≤0.03, 0≤w1≤0.3, 0.9≤ x1+y1+z1+w1≤1.1, and 0≤b1≤0.1,
   M¹ is one or more elements selected from among B, Ba, Ca, Ce, Cr, Fe, Mg, Mo, Nb, Si, Sn, Sr, Ti, V, W, Y, and Zr, and
   X is one or more elements selected from among F, P, and S.
Clause 16. The positive electrode active material of any one of clauses 1 to 15, wherein
   the core particles are secondary particles each formed by agglomerating a plurality of primary particles, and
   the positive electrode active material further comprises a grain boundary coating portion comprising Al and located on surfaces of the primary particles inside the secondary particles.
Clause 17. The positive electrode active material of clause 16, wherein
   Al in the grain boundary coating portion is less in amount than Al in the coating layer.
Clause 18. The positive electrode active material of any one of clauses 1 to 17, wherein
   the positive electrode active material is in a form of particles and the particles have an average particle diameter (D₅₀) of 10 µm to 25 µm.
Clause 19. The positive electrode active material of any one of clauses 1 to 18, wherein
   the positive electrode active material does not comprise sodium.
Clause 20. A method for preparing a positive electrode active material, the method comprising
   preparing core particles comprising a layered lithium (Li) nickel (Ni)-manganese (Mn)-based composite oxide having a nickel content of greater than or equal to 60 mol% based on 100 mol% of a total metal in the layered lithium nickel-manganese-based composite oxide excluding lithium, and having a residual lithium content on a surface of the core particles of 0.15 wt% to 0.25 wt%,
   adding aluminium sulfate to an aqueous solvent and mixing to prepare a coating solution,
   adding the core particles to the coating solution and mixing to prepare a mixed solution with a pH of 5.5 to 7.5, and
   removing the aqueous solvent from the mixed solution, drying and performing heat treatment on a resulting product to obtain the positive electrode active material.
Clause 21. The method of clause 20, wherein
   in the layered lithium nickel-manganese-based composite oxide, based on 100 mol% of the total metal in the layered lithium nickel-manganese-based composite oxide excluding lithium, the nickel content is 60 mol% to 80 mol%, a manganese content is greater than or equal to 10 mol%, an aluminium content is 0 mol% to 3 mol%, and a cobalt content is 0 mol% to 0.01 mol%.
Clause 22. The method of clause 20 or clause 21, wherein
   based on 100 wt% of the core particles,
   a content of LiOH remaining on the surface of the core particles is 0.3 to 0.5 wt%, and
   a content of Li₂CO₃ remaining on the surface of the core particles is 0.25 wt% to 0.6 wt%.
Clause 23. The method of any one of clauses 20 to 22, wherein
   an aluminium content from the aluminium sulfate is 0.5 mol% to 1.5 mol% based on 100 mol% of a sum of: a total metal excluding lithium in the core particles; and an aluminium of the aluminium sulfate.
Clause 24. The method of any one of clauses 20 to 23, wherein
   a duration of the adding of the aluminium sulfate and the mixing is 1 minute to 60 minutes, and a mixing speed is 100 rpm to 800 rpm.
Clause 25. The method of any one of clauses 20 to 24, wherein
   the coating solution is colorless and transparent, and has a pH of 1.5 to 3.5.
Clause 26. The method of any one of clauses 20 to 25, wherein
   the adding of the core particles to the coating solution is at a rate of 30 seconds/500 g to 2 minutes/500 g,
   a mixing time after the adding of the core particles to the coating solution is 15 to 60 minutes, and
   a pH of a supernatant after completion of the mixing is 5.5 to 7.5.
Clause 27. The method of any one of clauses 20 to 26, wherein
   after the removing of the aqueous solvent from the mixed solution, the drying of the resulting product is carried out in a vacuum condition at 40 °C to 240 °C.
Clause 28. The method of any one of clauses 20 to 27, wherein
   the positive electrode active material obtained by the removing of the aqueous solvent from the mixed solution and the drying of the resulting product comprises the core particles and an Al-containing coating layer located on the surface of the core particles, and the Al-containing coating layer is in a form of a mesh or spider web.
Clause 29. The method of any one of clauses 20 to 28, wherein
   the heat treatment is performed at 700 °C to 850 °C.
Clause 30. The method of any one of clauses 20 to 29, wherein the positive electrode active material comprises:
   the core particles, and
   a coating layer located on the surface of the core particles and comprising aluminium oxide, lithium-aluminium oxide, or a combination thereof.
Clause 31. A positive electrode, comprising:
   a positive electrode current collector, and
   a positive electrode active material layer on the positive electrode current collector,
   wherein the positive electrode active material layer comprises the positive electrode active material of any one of clauses 1 to 19.
Clause 32. The positive electrode of clause 31, wherein
   the positive electrode active material layer has a loading level of 10 mg/cm² to 40 mg/cm².
Clause 33. The positive electrode of clause 31 or clause 32, wherein
   the positive electrode active material layer has a density of 3.3 g/cc to 3.7 g/cc.
Clause 34. A rechargeable lithium battery, comprising:
   the positive electrode of any one of clauses 31 to 33,
   a negative electrode, and
   an electrolyte.
Clause 35. The rechargeable lithium battery of clause 34, wherein
   a charging voltage of the rechargeable lithium battery is greater than or equal to 4.45 V.

## Claims

1. A positive electrode active material, comprising:
a plurality of core particles comprising a layered lithium (Li) nickel (Ni)-manganese (Mn)-based composite oxide having a nickel content of greater than or equal to 60 mol% based on 100 mol% of a total metal in the layered lithium nickel-manganese-based composite oxide excluding lithium, and
a coating layer on a surface of the core particles and comprising aluminium (Al),
wherein Al in the coating layer is 0.5 mol% to 1.5 mol% in amount based on 100 mol% of the total metal in the positive electrode active material excluding lithium, and
the coating layer comprises a fibrous structure.

2. The positive electrode active material as claimed in claim 1, wherein
the coating layer is in a form of a mesh or spider web.

3. The positive electrode active material as claimed in claim 1 or claim 2, wherein:
(i) the coating layer exists continuously on the surface of the core particles; and/or
(ii) the coating layer is 5 nm to 200 nm in thickness.

4. The positive electrode active material as claimed in any one of claims 1 to 3, wherein:
(i) a deviation in a thickness of the coating layer within one positive electrode active material particle is less than or equal to 20%; and/or
(ii) the coating layer comprises a layered aluminium compound.

5. The positive electrode active material as claimed in any one of claims 1 to 4, wherein:
(i) the coating layer comprises aluminium oxide, lithium-aluminium oxide, or a combination thereof; and/or
(ii) the coating layer comprises LiAlO₂; and/or
(iii) the coating layer further comprises nickel, manganese, or a combination thereof; and/or
(iv) Al is 45 at% to 55 at% in amount based on 100 at% of a total metal on the surface of the positive electrode active material excluding lithium, as measured through Energy profiling energy dispersive X-ray spectroscopy (EP-EDS) on the surface of the positive electrode active material; and/or
(v) in the layered lithium nickel-manganese-based composite oxide, nickel is 60 mol% to 80 mol% in amount based on 100 mol% of the total metal in the layered lithium nickel-manganese-based composite oxide excluding lithium and manganese is greater than or equal to 15 mol% in amount based on 100 mol% of the total metal in the layered lithium nickel-manganese-based composite oxide excluding lithium; and/or
(vi) the layered lithium nickel-manganese-based composite oxide further comprises aluminium, and the aluminium in the core particles is 1 mol% to 3 mol% in amount based on 100 mol% of the total metal in the positive electrode active material excluding lithium, optionally wherein a concentration of aluminium in the core particles is uniform.

6. The positive electrode active material as claimed in any one of claims 1 to 5, wherein:
(i) in the layered lithium nickel-manganese-based composite oxide, cobalt is 0 mol% to 0.01 mol% in amount based on 100 mol% of the total metal in the layered lithium nickel-manganese-based composite oxide excluding lithium; and/or
(ii) the layered lithium nickel-manganese-based composite oxide is represented by Chemical Formula 1:
Chemical Formula 1 Liₐ₁Niₓ₁Mn_{y1}Al_{z1}M¹_{w1}O_{2-b1}X_{b1}
wherein in Chemical Formula 1,
0.9≤a1≤1.8, 0.6≤x1≤0.8, 0.1≤y1≤0.4, 0≤z1≤0.03, 0≤w1≤0.3, 0.9≤ x1+y1+z1+w1≤1.1, and 0≤b1≤0.1,
M¹ is one or more elements selected from among B, Ba, Ca, Ce, Cr, Fe, Mg, Mo, Nb, Si, Sn, Sr, Ti, V, W, Y, and Zr, and
X is one or more elements selected from among F, P, and S.

7. The positive electrode active material as claimed in any one of claims 1 to 6, wherein
the core particles are secondary particles each formed by agglomerating a plurality of primary particles, and
the positive electrode active material further comprises a grain boundary coating portion comprising Al and located on surfaces of the primary particles inside the secondary particles, optionally wherein
Al in the grain boundary coating portion is less in amount than Al in the coating layer.

8. The positive electrode active material as claimed in any one of claims 1 to 7, wherein:
(i) the positive electrode active material is in a form of particles and the particles have an average particle diameter (D₅₀) of 10 µm to 25 µm; and/or
(ii) the positive electrode active material does not comprise sodium.

9. A method for preparing a positive electrode active material, the method comprising
preparing core particles comprising a layered lithium (Li) nickel (Ni)-manganese (Mn)-based composite oxide having a nickel content of greater than or equal to 60 mol% based on 100 mol% of a total metal in the layered lithium nickel-manganese-based composite oxide excluding lithium, and having a residual lithium content on a surface of the core particles of 0.15 wt% to 0.25 wt%,
adding aluminium sulfate to an aqueous solvent and mixing to prepare a coating solution,
adding the core particles to the coating solution and mixing to prepare a mixed solution with a pH of 5.5 to 7.5, and
removing the aqueous solvent from the mixed solution, drying and performing heat treatment on a resulting product to obtain the positive electrode active material.

10. The method as claimed in claim 9, wherein:
(i) in the layered lithium nickel-manganese-based composite oxide, based on 100 mol% of the total metal in the layered lithium nickel-manganese-based composite oxide excluding lithium, the nickel content is 60 mol% to 80 mol%, a manganese content is greater than or equal to 10 mol%, an aluminium content is 0 mol% to 3 mol%, and a cobalt content is 0 mol% to 0.01 mol%; and/or
(ii) based on 100 wt% of the core particles,
a content of LiOH remaining on the surface of the core particles is 0.3 to 0.5 wt%, and
a content of Li₂CO₃ remaining on the surface of the core particles is 0.25 wt% to 0.6 wt%.

11. The method as claimed in claim 9 or claim 10, wherein:
(i) an aluminium content from the aluminium sulfate is 0.5 mol% to 1.5 mol% based on 100 mol% of a sum of: a total metal excluding lithium in the core particles; and an aluminium of the aluminium sulfate; and/or
(ii) a duration of the adding of the aluminium sulfate and the mixing is 1 minute to 60 minutes, and a mixing speed is 100 rpm to 800 rpm; and/or
(iii) the coating solution is colorless and transparent, and has a pH of 1.5 to 3.5; and/or
(iv) the adding of the core particles to the coating solution is at a rate of 30 seconds/500 g to 2 minutes/500 g,
a mixing time after the adding of the core particles to the coating solution is 15 to 60 minutes, and
a pH of a supernatant after completion of the mixing is 5.5 to 7.5.

12. The method as claimed in any one of claims 9 to 11, wherein:
(i) after the removing of the aqueous solvent from the mixed solution, the drying of the resulting product is carried out in a vacuum condition at 40 °C to 240 °C; and/or
(ii) the positive electrode active material obtained by the removing of the aqueous solvent from the mixed solution and the drying of the resulting product comprises the core particles and an Al-containing coating layer located on the surface of the core particles, and the Al-containing coating layer is in a form of a mesh or spider web; and/or
(iii) the heat treatment is performed at 700 °C to 850 °C; and/or
(iv) the positive electrode active material comprises:
the core particles, and
a coating layer located on the surface of the core particles and comprising aluminium oxide, lithium-aluminium oxide, or a combination thereof.

13. A positive electrode, comprising:
a positive electrode current collector, and
a positive electrode active material layer on the positive electrode current collector,
wherein the positive electrode active material layer comprises the positive electrode active material as claimed in any one of claims 1 to 8.

14. The positive electrode as claimed in claim 13, wherein:
(i) the positive electrode active material layer has a loading level of 10 mg/cm² to 40 mg/cm²; and/or
(ii) the positive electrode active material layer has a density of 3.3 g/cc to 3.7 g/cc.

15. A rechargeable lithium battery, comprising:
the positive electrode as claimed in claim 13 or claim 14,
a negative electrode, and
an electrolyte, optionally wherein
a charging voltage of the rechargeable lithium battery is greater than or equal to 4.45 V.
